(19) **Europäisches Patentamt**

**European Patent Office**

**Office européen des brevets**

(11) Publication number: **0 029 687**
**B1**

(12) # EUROPEAN PATENT SPECIFICATION

(45) Date of publication of patent specification: **10.08.83**

(51) Int. Cl.³: **H 01 F 1/11, C 01 G 37/027**

(21) Application number: **80304081.5**

(22) Date of filing: **13.11.80**

(54) **Process for stabilizing ferromagnetic chromium dioxide.**

(30) Priority: **16.11.79 IT 2733379**

(43) Date of publication of application:
**03.06.81 Bulletin 81/22**

(45) Publication of the grant of the patent:
**10.08.83 Bulletin 83/32**

(84) Designated Contracting States:
**BE DE FR GB NL**

(56) References cited:
**DE - A - 2 325 132**
**FR - A - 2 052 865**
**GB - A - 1 187 154**

(73) Proprietor: **Montedison S.p.A.**
**Patents & Licensing Dept. Foro Buonaparte, 31**
**P.O. Box 10528**
**I-20121 Milan (IT)**

(72) Inventor: **Basile, Giampiero**
**37, Via Giovanni Bosco**
**Alessandria (IT)**
Inventor: **Boero, Giancarlo**
**8/A, Strada S. Spirito**
**Asti (IT)**
Inventor: **Mello Ceresa, Emiliano**
**67, Via Milano-Vigliano**
**Biellese (Vercelli) (IT)**
Inventor: **Montino, Franco**
**15, Via Callori**
**Casale Monferrato (Alessandria) (IT)**

(74) Representative: **Whalley, Kevin et al,**
**Marks & Clerk 57/60 Lincoln's Inn Fields**
**London WC2A 3LS (GB)**

Courier Press, Leamington Spa, England

### Process for stabilizing ferromagnetic chromium dioxide

The present invention relates to a process for stabilizing ferromagnetic chromium dioxide.

Chromium dioxide is a material endowed with high magnetic characteristics, which is prevailingly used in the field of magnetic recording tapes. It exhibits a certain chemical reactivity to water and to certain organic substances, particularly to ones containing easily oxidable functional groups, such as, for example, hydroxyl or amino groups. Such functional groups are often present in the resins used in the compositions for magnetic tapes, wherefore the $CrO_2$ particles incoporated in the tape may oxidize them, being themselves reduced at least superficially to chromium compounds having a lower valence, such as CrOOH, which are not ferromagnetic, wherefore the residual magnetization of the magnetic tape can decrease as time goes on. By consequence, a tape on which a recording has been carried out may exhibit, after a certain time period, a decrease in the output level.

As is known, $CrO_2$ can be stabilized by subjecting the surface of its particles to a reducing treatment, by reacting it, for example, with $H_2S$ or alkaline bisulphites. In this way a reduced phase forms on the particle surface, in which the chromium valence is comprised between 3 and 4. The presence of such foreign phase causes a lowering of the maximum and residual magnetization of $CrO_2$. Furthermore, such treatment has the drawback of consuming, through the reduction reaction, a considerable amount (up to about 30%) of treated $CrO_2$.

It has been also suggested to stabilize $CrO_2$ by coating its particles with various water-insoluble inert substances, for example with $SiO_2$ or $Al_2O_3$. Often it was not possible to obtain an appreciable stabilizing effect by means of such coatings. On the other hand they cause also a decrease of the maximum and residual magnetization of the product. Futhermore such coatings involve physical modifications of the surface of the $CrO_2$ particles: there is an increase in the specific surface of the magnetic pigment and, consequently, in its binder absorption, wherefore it is not possible to prepare a magnetic layer of resin and pigment in which the volume concentration of $CrO_2$ may be sufficiently high to impart to the tape a good storage capacity of the signals.

These two kinds of methods require furthermore an accurate preliminary grinding of $CrO_2$ in order to make the stabilizing treatment possible.

British Patent No. 1,187,154 describes a process for preparing chromium dioxide according to which $CrO_3$ (or an other chromium oxide in which the chromium has a valence greater than four) is heated in a reaction chamber at a temperature of 250° to 375°C and at a pressure not greater than one atmosphere, while continuously introducing into the reaction chamber nitric oxide, possibly mixed with gaseous diluents such as oxygen, nitrogen or an inert gas. The presence of NO, which acts as a mild reducing agent, helps to control the decomposition of $CrO_3$ in such a way that large quantities of $CrO_2$ are obtained. The function of the oxygen, nitrogen or inert gas is to dilute the NO stream.

It is an object of the present invention to provide a process useful to impart to $CrO_2$ a high chemical stability to water and to oxidable organic substances and by consequence a high chemical stability in magnetic tapes in which $CrO_2$ is employed.

Another object is to obtain such result without having recourse to a surface chemical reaction with $CrO_2$, so avoiding consuming a part of such $CrO_2$ during the stabilizing treatment.

A further object is that of stabilizing $CrO_2$ without causing a lowering of the maximum and residual magnetization of the product as a consequence of the treatment.

Still another object is that of preventing an increase of the specific surface and of the binder absorption of $CrO_2$, therefore allowing a good volume concentration of $CrO_2$ in the magnetic layer of the tape.

A further object is to provide a stabilizing process very easy to be practised and capable of making it unnecessary to carry out an accurate grinding of $CrO_2$ prior to treatment.

The present invention provides a process for stabilizing ferromagnetic chromium dioxide according to which a chromium dioxide having a coercive force equal to or higher than $400 \cdot 10^3/4\pi$ A/m, a maximum magnetic introduction $B_m$ equal to or higher than 0.25 tesla and a residual magnetic induction $B_r$ equal to or higher than 0.16 tesla is stabilized according to the following procedure, comprising subjecting $CrO_2$ to a heat treatment at a temperature ranging from 300 to 390°C in the presence of a stream of nitrogen or a rare gas.

Thus it has been found, according to this invention, that starting from a $CrO_2$ having satisfactory magnetic characteristics it is possible to attain a good stabilization by subjecting the product to a thermal treatment in a narrow temperature range (300—390°C) in a gas stream not exerting any oxidizing or reducing action on the compounds of trivalent, tetravalent and hexavalent-chromium. The choice of this gas represents a critical factor of the present invention: should oxygen be used, for example, which, at such temperatures, is capable of oxidizing the trivalent chromium compounds, for instance CrOOH to $CrO_2$, the attainable stabilizing effect would be nil or negligible.

As the gas free from oxidizing and reducing properties there is used nitrogen or a rare gas, for example helium or argon. Nitrogen is preferably used. The gas stream flow rate must be calculated as a function of the $CrO_2$ amount to be treated. It is advisable to use a flow rate ranging from 25 to 100 liters/hours/kg of $CrO_2$. Also higher flow rates may be used, but that would involve a higher cost of the

# 0 029 687

operation without any improvement of the results. If lower flow rates are used, it may happen that a sufficient stabilization is not obtained.

As already explained hereinbefore, another critical feature of this process consists in that the starting $CrO_2$ must possess a certain level of magnetic properties: the coercive force must be equal to or higher than $400 \cdot 10^3/4\pi$ A/m, $B_m$ must be equal to or higher than 0.25 tesla and $B_r$ must be equal to or higher than 0.16 tesla.

These measurements have been carried out in a magnetizing field of $1000 \cdot 10^3/4\pi$ A/m.

By subjecting products having magnetic properties far below these values to the treatment according to the present invention, it may happen that a low or even no stabilizing effect is achieved. This does not limit in any way the usefulness of this invention, because products endowed with magnetic properties lower than the above-specified values are of no use.

The process is applicable to both non-modified chromium dioxide and to chromium dioxide modified with one or more modifying elements such as, for example, Sb, Te, Sb, and Fe, Te and Fe.

A non-modified $CrO_2$ exhibiting a degree of magnetic properties as required by the present invention can be prepared, for example, starting from $Cr_2O_5$ according to the process described in USA Patent No. 3,117,093; it can be prepared also starting from $CrO_3$ and from the product prepared by calcination at 600°C of $Cr(OH)_3$ obtained from $Cr(NO_3)_3.9H_2O$, conforming to the process of USA Patent No. 3,278,263.

A $CrO_2$ modified with Sb (or with Sb and Fe), having the required level of magnetic properties, can be prepared, for example, from $CrO_3$ and $Sb_2O_3$ (and hydrated ferric oxide) in the presence of water according to the process of USA Patent No. 2,923,683; it can be obtained from $Cr_2(CrO_4)_3.11 H_2O$ and $Sb_2O_3$ (and hydrated ferric oxide) according to the process of USA Patent No. 3,979,310.

A $CrO_2$ modified with Te (or with Te and Fe) exhibiting the required magnetic properties is obtainable, for example, from $Cr_2(CrO_4)_3.11H_2O$ and $H_6TeO_6$ (and $FeSO_4$) according to the process of British Patent No. 1,524,576.

The same products prepared according to other processes and other products may be used as starting products of the present invention, provided their magnetic properties are not lower than the values specified.

The product to be treated needs a rough preliminary grinding, such as to provide a ground product having sizes not exceeding 100 $\mu$m. Such grinding can be effected in a dry grinder, for example in an Alpine impact stud mill with counter-rotating stud disks of the Contraplex type.

The thermal treatment in a flow of nitrogen or a rare gas can then be carried out, at temperatures ranging from 300 to 390°C. By operating below 300°C, sufficient stability cannot be achieved. By operating above 390°C, $CrO_2$ tends to decompose. It is preferred to operate at temperatures comprised between 340 and 390°C.

The treatment time is the shorter, the higher the temperature.

Generally, the treatment time ranges from 20 minutes to 15 hours. For products having a very high coercive force, i.e. with a $H_c$ of at least $750 \cdot 10^3/4\pi$ A/m, it is necessary to employ relatively short times for calcination, for example of 20—45 minutes, and relatively high temperatures, for example 370—390°C.

Calcination can be effected in a stative furnace or, preferably, in a rotary furnace.

After calcination, the calcined product can be washed with water. Such washing is carried out in order to remove the hexavalent chromium contained in the starting product as well as that which may have formed during the calcining treatment.

For starting product containing no more than 1000—2000 ppm of Cr(VI), calculated as $CrO_3$, such washing is not essential: products having good stability characteristics can be obtained without having recourse to washing; however, the corresponding washed products prove somewhat stabler. Prior to washing, it is advisable to carry out a wet grinding, for example in a sand mill, until reaching a granulometry of the order of 10 $\mu$ or less. In this case washing proves highly effective and the washed and dried product has a content of residual Cr(VI) of only 100—300 ppm.

Drying of the washed product occurs at temperatures which are low enough to prevent $CrO_2$ from reacting with water; it is suitable to work for example at 60—70°C, operating under vacuum, for example at a 2000 Pa pressure.

Since wet grinding is more effective than dry grinding it is preferable to subject the product to wet grinding and to washing.

Otherwise a dry grinding is carried out, for example in an Alpine impact stud mill with counter-rotating stud disks of the Contraplex type, until obtaining, for instance, particles with a granulometry of the order of 100 $\mu$m.

The products stabilized according to the present invention exhibit a remarkable stability to water and to oxidable organic substances, and therefore prove to be highly stable in magnetic tapes.

The stability of such products was evaluated on a tape, under particularly severe conditions, according to a method known in itself, which consists in exposing a magnetic tape made with $CrO_2$, for a few days, in a warm chamber at a high relative humidity degree, and in measuring the worsening of the residual magnetic induction caused by such exposure; such worsening is substantially proportional to the decomposition of $CrO_2$.

3

The main advantages of the present invention, besides a high stability, are in brief the following:

no decrease in the $B_m$ and $B_r$ of the product is caused by the treatment;

it is not necessary to effect a surface chemical reaction with $CrO_2$, thus avoiding consuming a portion of $CrO_2$;

no increase in the specific surface and in the binder absorption of $CrO_2$ is caused, so allowing a good volume concentration of $CrO_2$ in the magnetic layer;

there is no need to carry out an accurate grinding of $CrO_2$ prior to the treatment;

the process of the present invention does not require any $CrO_2$ washing before the treatment, while a washing is necessary when it is desired to coat with $CrO$ with a water-insoluble inert substance.

The invention will be further described with reference to the following illustrative Examples.

Example 1

The starting $CrO_2$ contained 900 ppm of Te and 1750 ppm of Fe. It was prepared starting from $Cr_2(CrO_4)_3 \cdot 11H_2O$, $H_6TeO_6$ and $FeSO_4$ according to example 12 of British Patent No. 1,524,578 except as regards the amounts of modifiers and the hydration degree of chromium chromate. The product exhibited the following magnetic properties: $H_c = 600 \cdot 10^3/4\pi$ A/m, $B_m = 0.2870$ tesla, $B_r = 0.1780$ tesla. These properties were measured by means of a hysteresigraph Ferrograph Förster 1033, operating in a magnetizing field of $1000 \cdot 10^3/4\pi$ A/m.

The accuracy in the $H_c$ measurement was of $\pm 10 \cdot 10^3/4\pi$ A/m; in the measurement of $B_m$ and $B_r$ the accuracy was of $\pm 0.01$ tesla.

$CrO_2$ was ground in an Alpine impact stud mill, Contraplex type, until reaching a granulometry of about 100 $\mu$m. 100 g of ground $CrO_2$ were introduced into a quartz 1000 ml bottle, which was made to rotate at about 30 rpm inside a furnace at a temperature of $340 \pm 10°$C.

Through a small glass tube having a diameter of 2 mm and penetrating into the bottle, a nitrogen flow of 10 l/h was made to pass over the $CrO_2$. Calcining was conducted during 10 hours.

At the conclusion of calcination the bottle was allowed to cool outside the furnace for about 30 minutes, whereupon the cold $CrO_2$ was taken out and dispersed in a beaker in sufficient deionized water as to obtain a slurry at 170 g/l of $CrO_2$. The slurry was kept under stirring for 60 minutes by a blade stirrer, rotating at 150 rpm, whereupon the $CrO_2$ was filtered on a Buchner funnel and washed with 10 portions of 500 cm³ of deionized water each.

The cake so obtained was caused to dry in an oven under a vacuum of about 1333 Pa, at 60°C, for 42 hours. The product was then ground in an agate mortar until obtaining agglomerates having sizes below 100 $\mu$m. The magnetic properties of the powder were determined by means of the apparatus described hereinbefore, using the same magnetizing field.

The following results were obtained: $H_c = 585 \cdot 10^3/4\pi$ A/m, $B_m = 0.2880$ tesla, $B_r = 0.1760$ tesla.

To determine the stability of the product, a film was prepared as follows:

5 g of stabilized chromium dioxide was added with 15 g of a composition for paints based on $CrO_2$ consisting of:

| | |
|---|---|
| polymeric compounds (saturated polyurethane and vinyl acetate/vinyl chloride copolymer) | 18% by weight |
| methylethylketone | 40% by weight |
| tetrahydrofuran | 20% by weight |
| dimethylacetamide | 20% by weight |
| anionic surfactant | 2% by weight |

After addition of 15 g of tetrahydrofuran, the whole was introduced into a 100 ml glass container along with 45 g of glass balls of 5 mm diameter.

The container was placed into a Red Devil vibrating disperser, where it was subjected to an intense stirring for 1 hour.

Successively a further 10 g of the above said composition and 5 g of tetrahydrofuran were added and the whole was stirred for a further 5 minutes.

The resulting homogeneous paint was spread on a flexible support consisting of a plasticized paperboard imparting with the film spreader a thickness of (203 $\mu$m). The spread film was allowed to dry for 24 hours, whereupon the $B_r$ was determined by means of the usual apparatus, employing the same magnetizing field.

The paperboard-supported film was then exposed for 4 days at 65°C in a chamber having a relative humidity of 50%.

The $B_r$ was measured again and the decrease percentage of such value due to said exposure was calculated. The $B_r$ loss was equal to 5.3%.

4

With an identical film prepared according to the same manner starting from 5 g of the same non-stabilized CrO$_2$ and simultaneously subjected to the same accelerated stability test, the B$_r$ loss was found to be equal to 19.4%.

The stabilized commercial product "CrO$_2$S$_4$" produced by Du Pont de Nemours, which tape producers consider as having a good stability, was subjected in the same manner to the same accelerated stability test; the B$_r$ loss was 11%.

Examples 2—4

Starting from different types of chromium dioxide, the stabilization thereof was obtained by following the same procedure as described in Example 1.

In test 2, the starting material was non-modified CrO$_2$ prepared from CrO$_3$ and from the product obtained by calcination at 600°C of Cr(OH)$_3$ obtained from Cr(NO$_3$)$_3$.9H$_2$O, according to the manner of Example 16 of USA Patent No. 3,278,263.

The resulting product exhibited the following magnetic characteristics:

$$H_c = 495 \cdot 10^3/4\pi \text{ A/m, } B_m = 0.2870 \text{ tesla, } B_r = 0.1790 \text{ tesla.}$$

In test 3 the starting material was CrO$_2$ modified with 0.55% by weight of Sb obtained from Cr$_2$(CrO$_4$)$_3$.11H$_2$O and Sb$_2$O$_3$, according to Example 4 of USA Patent No. 3,979,310, except that there was used Cr$_2$(CrO$_4$)$_3$.11H$_2$O instead of Cr$_2$(CrO$_4$)$_3$.10H$_2$O.

The product had the following magnetic characteristics:

$$H_c = 495 \cdot 10^3/4\pi \text{ A/m, } B_m = 0.2840 \text{ tesla, } B_r = 0.1710 \text{ tesla.}$$

In test 4 the starting material was CrO$_2$ modified with 0.17% by weight of Sb, obtained from CrO$_3$ and Sb$_2$O$_3$ in the presence of water, following Example 7 of USA Patent No. 2,923,683.

The resulting product exhibited the following magnetic characteristics:

$$H_c = 390 \cdot 10^3/4\pi \text{ A/m, } B_m = 0.2850 \text{ tesla, } B_r = 0.1750 \text{ tesla.}$$

The magnetic properties of the calcined products are indicated in Table 1.

The stability test of Example 1 was carried out for each of the products both on the product not subjected to the stabilizing treatment and on the stabilized product. The results of the stability tests expressed as percentage of B$_r$ loss ($\Delta$ B$_r$%) are recorded in Table 1.

TABLE 1

| Test No. | Composition of the starting product | Magnetic properties of calcined product | | | $B_r$ loss after stability test: $\Delta B_r$ % | |
|---|---|---|---|---|---|---|
| | | $H_c$ ($10^3/4\pi$ A/m) | $B_m$ (tesla) | $B_r$ (tesla) | stabilized product | non-stabilized product |
| 2 | non-modified $CrO_2$ | 500 | 0.2940 | 0.1800 | 9.3 | 19.1 |
| 3 | $CrO_2$ — 0.55% Sb | 475 | 0.2910 | 0.1730 | 8.3 | 18.1 |
| 4 | $CrO_2$ — 0.17% Sb | 400 | 0.2810 | 0.1725 | 8.6 | 18.3 |

0 029 687

Examples 5—7

Starting from the same $CrO_2$ as in Example 1, the procedure was as described in Example 1, except for the following:

a) grinding prior to calcination was carried out in a more or less accurate manner. More particularly: in test 5 grinding was carried out until a granulometry of about 1 mm was attained; in tests 6 and 7 grinding was carried out until a granulometry of about 100 $\mu$m and about 10 $\mu$m respectively was attained;

b) washing after calcination was not carried out.

The results obtained are recorded in Table 2.

From an examination of such results it is apparent that an accurate grinding of the product to be treated is not necessary to ensure a good stability.

TABLE 2

| Test No. | Product granulometry before calcination | Magnetic properties of the calcined product | | | $\Delta B_r \%$ | |
|---|---|---|---|---|---|---|
| | | $H_c$ $(10^3/4\pi$ A/m) | $B_m$ (tesla) | $B_r$ (tesla) | stabilized product | non-stabilized product |
| 5 | 1 mm | 610 | 0.2750 | 0.1700 | 7.2 | 19.4 |
| 6 | 100 $\mu$m | 610 | 0.2960 | 0.1880 | 6.7 | 19.4 |
| 7 | 10 $\mu$m | 590 | 0.2800 | 0.1740 | 8.6 | 19.4 |

## Example 8

Starting from the same $CrO_2$ as in Example 1, the procedure was as described in Example 1, except for the following:

a) calcination temperature was $370 \pm 10°C$,

b) calcination time was 2 hours,

c) no washing after calcination was effected.

The magnetic properties of the calcined product were as follows:

$H_c = 600 \cdot 10^3/4\pi$ A/m, $B_m = 0.2850$ tesla, $B_r = 0.1780$ tesla.

After the stability test, the $B_r$ loss was 7.4% against 19.4% for the non-stabilized product subjected to the same test.

## Example 9

This example serves to show that the use of a gas stream without any oxidizing or reducing action on the compounds of trivalent, tetravalent and hexavalent chromium is critical. For this purpose there was used an $O_2$ stream.

The same chromium dioxide of Example 1 was employed and the procedure was as described in Example 1, except that the calcination treatment was conducted in an $O_2$ stream at a flow rate of 10 l/h and lasted 4 hours.

After calcination the product exhibited the following properties:

$H_c = 600 \cdot 10^3/4\pi$ A/m, $B_m = 0.3050$ tesla, $B_r = 0.1950$ tesla.

After the stability test, the $B_r$ loss was 16.3% against 18.2% for the starting product subjected to the same test.

## Example 10

The starting $CrO_2$ contained 750 ppm of Te and 17,500 ppm of Fe, and was prepared starting from $Cr_2(CrO_4).11 H_2O$, $H_6TeO_6$ and $FeSO_4$, according to the procedure described in British patent No. 1,524,578. The product exhibited the following magnetic properties, determined in an induction field of 0.2000 tesla:

$H_c = 930 \cdot 10^3/4\pi$ A/m, $B_m = 0.3760$, $B_r = 0.2310$ tesla.

The procedure was as described in Example 1, except for the following:

a) calcination temperature was $380° \pm 10°C$,

b) calcination time was 45 minutes,

c) after calcination, and prior to washing, $CrO_2$ was subjected to grinding in a microball mill for 30 minutes.

The magnetic properties of the calcined product, measured in an induction field of 0.2000 tesla, were as follows:

$H_c = 860 \cdot 10^3/4\pi$ A/m, $B_m = 0.3900$ tesla, $B_r = 0.2300$ tesla.

The $B_r$ loss was 8.2% against 19% for the non-stabilized product subjected to the same test.

## Claims

1. A process for stabilizing ferromagnetic chromium dioxide having a coercive force equal to or higher than $400 \cdot 10^3/4\pi$ A/m, a maximum magnetic induction equal to or higher than 0.25 tesla and a residual magnetic induction equal to or higher than 0.16 tesla, characterised in that $CrO_2$ is subjected to a heat treatment at a temperature ranging from 300 to 390°C in the presence of a stream of nitrogen or a rare gas.

2. A process according to claim 1, characterised in that the heat treatment is conducted at a temperature ranging from 340 to 390°C.

3. A process according to claim 1 or 2, characterised in that the product is washed with water after the heat treatment.

## Patentansprüche

1. Verfahren zur Stabilisierung von ferromagnetischem Chromdioxid mit einer Koerzitivkraft entsprechend oder höher als $400 \cdot 10^3/4\pi$ A/m, einer maximalen magnetischen Induktion entsprechend oder höher als 0,25 Tesla und einer remanenten magnetischen Induktion entsprechend oder höher als 0,16 Telsa, dadurch gekennzeichnet, daß $CrO_2$ einer Wärmebehandlung bei einer Temperatur im Bereich

**0 029 687**

von 300 bis 390°C in Gegenwart eines Stickstoffstroms oder eines Edelgases unterzogen wird.

2. Verfahren gemäß Anspruch 1, dadurch gekennzeichnet, daß die Wärmebehandlung bei einer Temperatur im Bereich von 340 bis 390°C durchgeführt wird.

3. Verfahren gemäß Anspruch 1 oder 2, dadurch gekennzeichnet, daß das Produkt nach der Wärmebehandlung mit Wasser gewaschen wird.

## Revendications

1. Procédé pour stabiliser du dioxyde de chrome ferromagnétique ayant un champ coercitif égale ou supérieur à $400.10^3/4\pi$ A/m, une induction magnétique maximale égale ou supérieure à 0,25 tesla et une induction magnétique rémanente égale ou supérieure à 0,16 tesla, caractérisé en ce que le $CrO_2$ est soumis à un traitement thermique à une température de l'ordre de 300 à 390°C en présence d'un courant d'azote ou de gaz rare.

2. Procédé selon la revendication 1, caractérisé en ce que le traitement thermique est mené à une température de l'ordre de 340 à 390°C.

3. Procédé selon la revendication 1 ou 2, caractérisé en ce que le produit est lavé à l'eau après traitement thermique.